# EUROPEAN PATENT SPECIFICATION

(11) **EP 3 418 874 B1**
(45) Date of publication and mention of the grant of the patent: **08.01.2020**
(21) Application number: 17176702.3
(22) Date of filing: 19.06.2017
(51) Int. Cl.: H04N 21/422, G06F 3/0488, G06F 3/041

(54) **A TOUCHSCREEN FOR A REMOTE CONTROL DEVICE**
BERÜHRUNGSBILDSCHIRM FÜR EINE FERNSTEUERUNGSVORRICHTUNG
ÉCRAN TACTILE POUR DISPOSITIF DE COMMANDE À DISTANCE

(43) Date of publication of application: 26.12.2018
(73) Proprietor: Vestel Elektronik Sanayi ve Ticaret A.S., 45030 Manisa (TR)
(72) Inventor: DEMIR, Murat, 45030 Manisa (TR); KAHRAMANOGLU, Gürmen, 45030 Manisa (TR)
(74) Representative: Flint, Adam

(56) References cited:
- US-A1- 2012 072 044
- US-A1- 2016 014 446

## Description

### Technical Field

The present disclosure relates to a touchscreen for a remote control device.

### Background

Electronic devices, such as televisions, etc., may conveniently be operated wirelessly over a short distance by use of a remote control.

A remote control device is typically a handheld device including either an array of buttons or a touchscreen having an input surface divided into an array of zones. Each button or zone corresponds to a particular function associated with the electronic device, such as "Volume Up". A user operates the remote control device by pressing the button or contacting the zone corresponding to their desired function.

US20120072044A1 discloses a user computer device which comprises a temperature-sensitive touchscreen having a temperature-sensitive user interface comprising multiple thermal energy emitter/detector devices, such as thermocouples.

US 2016/014446 A1 discloses a touchscreen used as a remote controller.

### Summary

The invention is as set out in the independent claim, further aspects of the invention are outlined in the dependent claims. Embodiments that do not fall within the scope of the claims do not describe part of the invention.

According to an aspect disclosed herein, there is provided a touchscreen for a remote control device of an electronic device, the touchscreen comprising:
an input surface divided into a plurality of zones; and
a plurality of temperature sensors, each temperature sensor being provided within a respective zone and constructed and arranged to obtain a measure of a temperature of a surface of the zone contacted by a user; wherein:
   each zone comprises a region formed from a material of relatively high thermal conductivity for contact by a user and the temperature of which is sensed by a temperature sensor to obtain a measure of a temperature of the surface of the zone, and a region formed from a material of relatively low thermal conductivity;
   each region formed from a material of relatively high thermal conductivity overlies and at least partially surrounds the temperature sensor of the respective zone; and
   the regions formed from a material of relatively high thermal conductivity are physically separated from one another by the region(s) formed from a material of relatively low thermal conductivity.

This arrangement helps to physically prevent parts of a user's hand from accidentally and unintentionally activating a temperature sensor during use of the touch screen, which could otherwise result in an undesired control signal being transmitted from the remote control device to the electronic device.

In an example, each region formed from a material of relatively high thermal conductivity is located directly above a respective temperature sensor.

In an example, each region formed from a material of relatively high thermal conductivity is located at the centre of its respective zone.

In an example, the surface of each zone comprises a relatively small region formed from a material of relatively high thermal conductivity and a relatively large region formed from a material of relatively low thermal conductivity.

In an example, in each zone, in a plane of the touchscreen, the region formed from a material of relatively low thermal conductivity surrounds the region formed from a material of relatively high thermal conductivity.

In an example, a touch screen comprises an ambient temperature sensor constructed and arranged to obtain a measure of the ambient temperature of the touch screen. This may allow for a control signal to be transmitted from the remote control device to the electronic device only if the temperature of a surface of the zone contacted by a user increases beyond a threshold related to the ambient temperature.

There may also be provided a remote control device comprising a touchscreen according to the first aspect disclosed herein, arranged such that functions controlled by the remote control device are selected by a user contacting a corresponding zone.

In an example, the remote control device comprises a controller constructed and arranged to receive inputs from the temperature sensors corresponding to a measure of a temperature of a surface of the respective zone contacted by a user, wherein the controller is arranged such that if inputs are received from more than one temperature sensor, the controller selects the function corresponding to the zone that has the highest temperature or the zone that first reached a predetermined temperature.

### Brief Description of the Drawings

To assist understanding of the present disclosure and to show how embodiments may be put into effect, reference is made by way of example to the accompanying drawings in which:
Figure 1 shows schematically a front face of an example of a remote control device including a touchscreen.
Figure 2 shows schematically an enlarged view of a portion of Figure 1; and
Figure 3 shows a flow diagram illustrating an example of a method of controlling the touchscreen shown in Figure 1.

### Detailed Description

Many electronic devices may conveniently be operated wirelessly over a short distance by use of a remote control. Such devices include for example televisions, DVD players, personal video recorders, set-top boxes, CD and MP3 players, TV or HiFi amplifiers, etc. A remote control device is typically a handheld device including either an array of buttons or a touchscreen having an area divided into an array of zones.

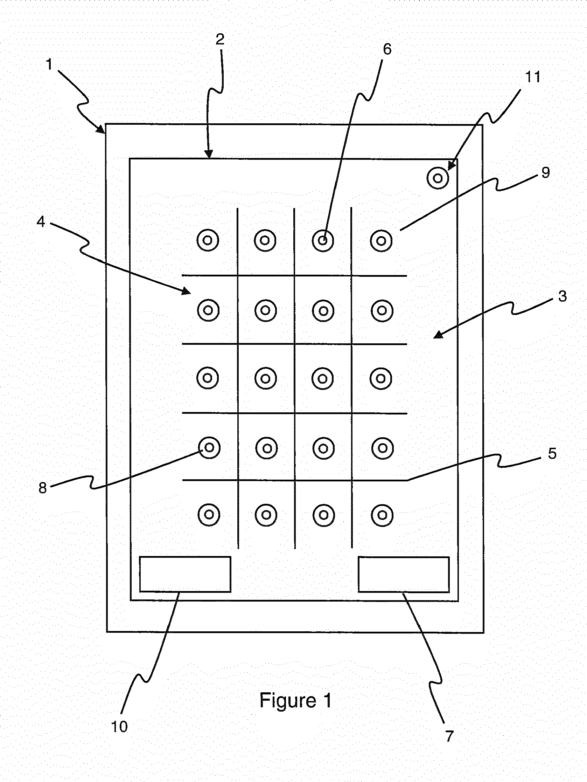

Referring now to Figure 1, there is shown schematically an example of a remote control device 1 having a touchscreen 2.

The touchscreen 2 has an input surface 3 divided into a plurality of zones 4 by dividing lines 5. Each of the zones 4 may be regarded as emulating or corresponding to a button. In this example, the dividing lines 5 separating the zones 4 are visible, but in other examples, the dividing lines 5 are not visible. Also, in this example, the input surface 3 is divided into an array of twenty rectangular zones 4, but in other examples, any number of zones 4 may be provided and the zones 4 may be any size or shape, or arranged in any configuration. Indeed, some zones 4 may have a different size or shape to other zones 4.

The touchscreen 2 includes a plurality of temperature sensors 6 provided beneath the input surface 3. In this example, each temperature sensor 6 corresponds to, and is provided within, a particular respective zone 4, and therefore the temperature sensors 6 are provided in an array. Other configurations are possible. Each temperature sensor 6 is provided at a location that is easily contactable by a user when a user touches a zone 4. In the example shown in Figure 1, each temperature sensor 6 is conveniently provided at the centre of its respective zone 4.

Each temperature sensor 6 is constructed and arranged to output a sensor signal to a controller 7 corresponding to a measure of the temperature of the surface of its corresponding zone 4, beneath the centre of which it is located. The signal may for example be output continuously or in response to a request from the controller 7.

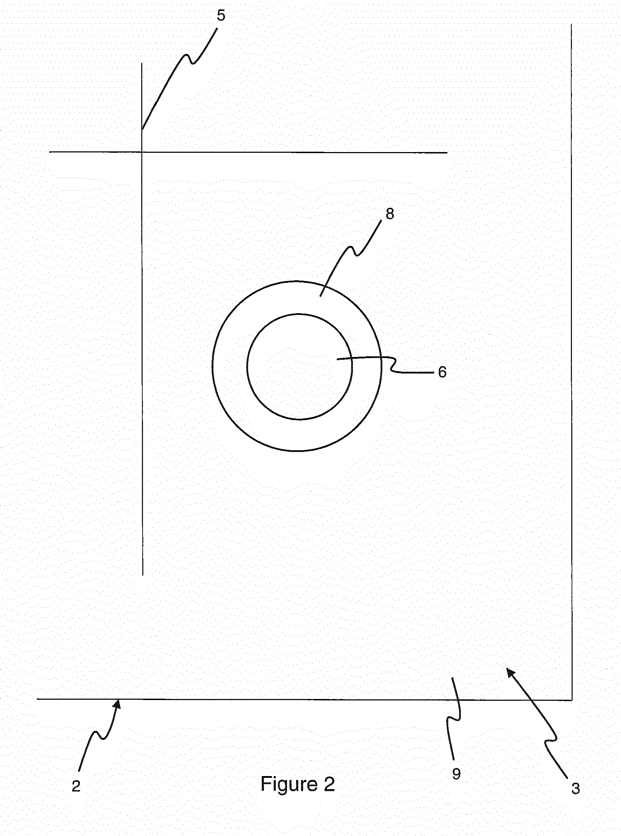

As is shown schematically in Figure 2 in particular, the region of the surface of each zone 4 under which a temperature sensor 6 is located is a region 8 that has a relatively high thermal conductivity. The size, shape and position of each high thermal conductivity region 8 may be at least partially based on the size, shape and position of a zone's temperature sensor 6. In this example, the central region of each zone 4 is a circular high thermal conductivity region 8, which overlies and partially surrounds the respective temperature sensor 6 for that zone 4. Each temperature sensor 6 obtains a measure of the temperature of the surface of a zone by sensing the temperature of the respective region 8 having a high thermal conductivity. The high thermal conductivity regions 8 may have a thermal conductivity of around 100 W/mK or higher. The high thermal conductivity regions 8 may be formed from for example aluminium or copper. The remaining region of the surface of each zone 4 is a region 9 of low thermal conductivity. Thus, much of each zone 4 and therefore much of the input surface 3 is a low thermal conductivity region 9, except for the areas above and around the temperature sensors 6. In this example, except for the region at and around their centre portion, the surface of each zone 4 is a low thermal conductivity region 9. The low thermal conductivity region 9 may have a thermal conductivity of around 10 W/mk or lower and may indeed be a heat insulator. The low thermal conductivity region 9 may be formed from for example fiberglass or a polymer material, such as polyvinyl chloride (PVC). The high thermal conductivity regions 8 of the input surface 3 are physically separated from one another by the low thermal conductivity region 9. An advantage of the above arrangement if that if a user touches the low thermal conductivity region 9, their body heat will not conduct to a high thermal conductivity region 8 and thus not be sensed by a temperature sensor 6.

A data storage 10 is provided. The data storage 10 stores information on associations between each temperature sensor 6/zone 4 and a particular function of an electronic device that is to be controlled by the remote control device 1. Each temperature sensor 6 is associated with a different function of the electronic device, such as, for example, "Device On/Off', "Volume Up", Volume Down", etc. For convenience, a display or a printed overlay (not shown) may be provided to indicate to a user the associations between the temperature sensors 6 and the various functions of the electronic device.

In this example, an ambient temperature sensor 11 is also provided. The ambient temperature sensor 11 is exposed to the environment and is constructed and arranged to constantly detect the temperature of the remote control's surrounding area. The ambient temperature sensor 11 also constantly sends ambient temperature sensor signals to the controller 7 to inform it of the sensed ambient temperature. The ambient temperature sensor 11 is located at a portion of the remote control device 1 that is less likely to be contacted by a user during use of the remote control device 1. A suitable location may be for example on the front face of the remote control device 1 and at an upper portion when the remote control device 1 is being held "normally", in for example portrait mode for the example shown. In the example shown, the ambient temperature sensor 11 is located at an uppermost corner of the front face of the remote control device 1.

The controller 7, which may be a processor or the like, is provided for controlling the operation of the touchscreen 2. The controller 7 is connected to each of the plurality of temperature sensors 6 and to the ambient temperature sensor 11.

On receipt of a sensor signal from a temperature sensor 6, the controller 7 is configured to cause the control device 1 to output a corresponding control signal to the electronic device being controlled. In one example, this may be on the basis that the temperature sensed by the relevant temperature sensor 6 has reached a predetermined, threshold temperature. In another example, the controller 7 may compare the corresponding sensed temperature from the temperature sensor 6 with the ambient temperature sensed by the ambient temperature sensor 11 to detect if there is a temperature difference, and thus if there has been a change in the temperature of the high thermal conductivity region 8 of the zone 4 in which the temperature sensor 6 is located. If there is a difference between the sensed and ambient temperatures, e.g. as a result of body heat due to a user contacting the high thermal conductivity region 8 of the zone 4 in which the temperature sensor 6 is located, and if the temperature difference is larger than a predetermined threshold, the controller outputs a control signal for activating the function of the electronic device associated with the temperature sensor 6. In another example, the controller 7 may compare the corresponding sensed temperature from the temperature sensor 6 with a previously sensed temperature from the respective temperature sensor 6 to detect if there is a temperature difference, and thus if there has been a change in the temperature of the high thermal conductivity region 8 of the zone 4 in which the temperature sensor 6 is located. If there is a difference between the sensed and previous temperatures, e.g. as a result of body heat due to a user contacting the high thermal conductivity region 8 of the zone 4 in which the temperature sensor 6 is located, and if the temperature difference is larger than a predetermined threshold, the controller outputs a control signal for activating the function of the electronic device associated with the temperature sensor 6. Examples of this are described in more detail below.

If the high thermal conductivity regions 8 of two or more zones 4 are contacted by a user at the same time or at least at approximately the same time, the controller 7 needs to determine which control function is intended and therefore which control signal to output. Examples of this are also described in more detail below.

The remote control device 1 may include additional hardware for transmitting the control signals to the electronic device, which may be conventional. The controller 7 outputs the control signals to a transmitter (not shown) of the remote control device 1 for transmission to the electronic device.

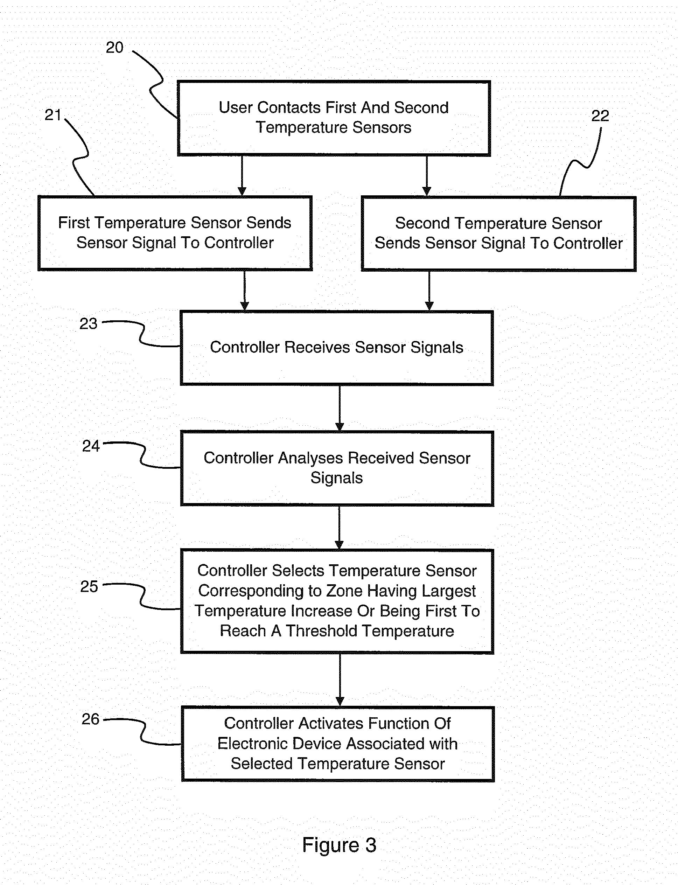

An example of a method of the controller 7 outputting a control signal corresponding to one respective temperature sensor 6 when it determines that the high thermal conductivity regions of the surfaces of two or more zones have been contacted by a user will now be described with reference to Figure 3.

Initially, a user is holding the remote control device 1 shown schematically in Figure 1 in their hand.

In this example, a first temperature sensor of the plurality of temperature sensors 6 is provided beneath a first high thermal conductivity region of a first zone. The first temperature sensor is associated with a "Volume Up" function of the electronic device. A second temperature sensor of the plurality of temperature sensors 6 is provided beneath a second high thermal conductivity region of second zone. The second temperature sensor is associated with a "Volume Down" function of the electronic device.

At 20, the user, who has decided to increase the volume of sound emitted by the electronic device, presses on the first high thermal conductivity region of the first zone containing the first temperature sensor by using, for example, their thumb. However, at the same time, the user also inadvertently partially presses the second zone containing the second temperature sensor. The user has therefore touched/contacted high thermal conductivity regions corresponding with two different temperature sensors 6. The two different temperature sensors 6 are each associated with different, and this example incompatible, functions of the electronic device. In this respect, the provision of the relatively smaller high thermal conductivity regions 8 above the temperature sensors and the surrounding relatively larger low thermal conductivity region 9 has assisted in reducing the amount of heat from the part of the user's thumb that is contacting the low thermal conductivity region 9 from being conducted to the high thermal conductivity region 7 above the second temperature sensor.

At 21, the heat of the user's thumb has increased the temperature of the surface of the first high thermal conductivity region of the first zone. The first temperature sensor sends a sensor signal to the controller 7, which effectively informs the controller 7 of this new temperature.

At 22, similarly, the heat from the user's thumb has increased the temperature of the surface of the second high thermal conductivity region of the second zone. The second temperature sensor sends a sensor signal to the controller 7, which effectively informs the controller 7 of this new temperature.

At 23, the controller 7 receives the sensor signals from the first and second temperature sensors. The controller also receives sensor signals from all other temperature sensors, which effectively informs the controller 7 of the new temperatures of the other zones. In an example, the controller 7 also receives a new ambient temperature signal from the ambient temperature sensor 11, which effectively informs the controller 7 of the ambient temperature of the touch screen 2.

At 24, the controller 7 analyses any received sensor signals to determine if the temperature of the high thermal conductivity region 8 of any zone has sufficiently increased and thus if any zone 4 has been contacted by a user. The controller 7 compares the newly sensed temperature of the high thermal conductivity region 8 of each zone 4 with either the new ambient temperature sensed by the ambient temperature sensor 11 or with a previously sensed temperature of the respective zone 4. If no temperature difference is detected, the controller 7 assumes that a user has not contacted the high thermal conductivity region 8 of a zone 4 and it takes no further action relating to the newly sensed temperature of that zone 4. However, if a temperature difference is detected, the controller 7 assumes that a user has contacted the high thermal conductivity region 8 of a zone 4 and it continues the method of analysis as described below.

The controller 7 then compares any determined temperature differences with a pre-determined minimum threshold temperature difference. This accounts for an unintentional temperature change, which can occur, for example, if the remote control device 1 is left in direct sunlight. If a determined temperature difference is smaller than the pre-determined minimum threshold temperature difference, the controller 7 decides that the determined temperature difference is insufficient and it takes no further action in this respect. If a determined temperature difference is larger than the pre-determined minimum threshold temperature difference, the controller 7 decides that the determined temperature difference is sufficient and it continues the method of analysis as described below.

In this example, the controller 7 compares the newly sensed temperatures of each high thermal conductivity region with the ambient temperature. Therefore, at 24, the controller 7 compares both the newly sensed temperature of the first high thermal conductivity region sensed by the first temperature sensor, T₁, and the newly sensed temperature of the second high thermal conductivity region sensed by the second temperature sensor, T₂, with the ambient temperature sensed by the ambient temperature sensor 11, T_{amb}. In this example, the user has contacted the high thermal conductivity region of both the first and second zones and therefore the temperature of these regions has increased. As a consequence, the controller 7 determines that T₁ is larger than T_{amb} by a temperature difference of ΔT₁, and that T₂ is larger than T_{amb} by a temperature difference of ΔT₂. The controller 7 then compares each of ΔT₁ and ΔT₂ with a pre-determined minimum threshold temperature difference, ΔTₘᵢₙ. In this example, the controller 7 determines that both ΔT₁ and ΔT₂ are larger than ΔTₘᵢₙ and consequently assumes that both zones have been contacted by a user.

In an example in which, at 24, the controller 7 determines that there is a temperature difference larger than the pre-determined minimum threshold temperature difference in the high thermal conductivity region 8 of only one zone 4, the controller 7 decides that the surface of only one zone 4 has been contacted by a user. Therefore, at 25, the controller 7 selects the temperature sensor corresponding to the respective zone 4. At 26, the controller 7 then outputs a control signal to activate the function of the electronic device associated with the selected temperature sensor. This control signal is received by a transmitter built into the remote control. In this example, the transmitter sends an infrared communication to the electronic device to instruct it to carry out the function associated with the identified temperature sensor.

However, if the controller 7 determines that there is a temperature difference larger than the pre-determined minimum threshold temperature difference in the high thermal conductivity region 8 of more than one zone 4, the controller 7 decides that the surface of two zones 4 have been contacted by a user. Therefore, at 25, the controller 7 selects a temperature sensor corresponding to one of the respective zones 4. At 26, the controller 7 outputs a control signal to activate the function of the electronic device associated with the one selected temperature sensor.

To this end, at 25, the controller 7 compares any determined temperature differences and identifies the high thermal conductivity region 8 of a zone 4 exhibiting the largest temperature difference (or the zone 4 that has reached the highest temperature). At 25, the controller 7 also analyses the sensor signals sent by the temperature sensors 6 of the zones 4 with a determined temperature difference to identify the high thermal conductivity region 8 that first reached a pre-determined threshold temperature, which is adjustable depending on, for example, the ambient temperature.

The controller 7 then selects either the temperature sensor corresponding to the high thermal conductivity region 8 that exhibited the largest temperature difference (or has reached the highest temperature) or the temperature sensor corresponding to the high thermal conductivity region 8 that first reached the pre-determined threshold temperature. The controller 7 decides which criterion to use based on a pre-determined weighting that prioritises one of the criteria depending on the actual determined temperature differences and the actual time taken for each high thermal conductivity region 8 to reach the pre-determined threshold temperature.

For example, if the controller 7 senses a very large temperature difference (and therefore a very high temperature) in a high thermal conductivity region 8 of a particular zone 4 compared to the other high thermal conductivity regions 8, the controller 7 prioritises selecting a temperature sensor based on the largest temperature difference. Alternatively, if the controller determines that the high thermal conductivity region 8 of a particular zone 4 reached the pre-determined threshold temperature very quickly compared to the other high thermal conductivity regions 8, the controller 7 prioritises selecting a temperature sensor based on the first high thermal conductivity region 8 to reach the pre-determined threshold temperature. The pre-determined weighting can be adjusted to optimise the criterion used to select a particular temperature sensor and thus optimise the selection of a temperature sensor.

In this example, at 25, the controller 7 determines, based on the temperature sensor signals, which of ΔT₁ and ΔT₂ is larger and therefore which of the first or second high thermal conductivity regions has a larger temperature difference and thus reached the highest temperature. The controller 7 also calculates, based on the sensor signals, that the first high thermal conductivity region took a time period of t₁ to reach the threshold temperature, T_{X}, and that the second high thermal conductivity region took a time period of t₂ to reach the threshold temperature, T_{X}. The controller 7 then determines which of t₁ and t₂ is the shortest time period and therefore which of the first and second high thermal conductivity regions first reached T_{X}. Depending on the specific values of ΔT₁, ΔT₂, t₁ and t₂, the controller 7 then prioritises either selecting a particular temperature sensor based on the largest temperature difference or selecting a particular temperature sensor based on the first high thermal conductivity region to reach the threshold temperature T_{X}.

In some specific examples, T₁ may be 20°C to 30°C, T₂, may be 18°C to 24°C, T_{amb} may be 10°C to 20°C, ΔTₘᵢₙ may be 1°C to 5°C, T_{X} may be 18°C to 22°C, t₁ may be 200ms to 1000ms and t₂ is may be 500ms to 1500ms.

In an example, T₁ is 24°C, T₂, is 19°C, T_{amb} is 15°C, ΔTₘᵢₙ is 2°C, T_{X} is 18°C, t₁ is 800ms and t₂ is 1000ms. Both of T₁ and T₂ are above T_{amb} so the controller 7 determines that the newly sensed temperatures of the first and second high thermal conductivity regions are not a result of a change in the ambient temperature. ΔT₁ is 9°C and ΔT₂ is 4°C, each of which are above ΔTₘᵢₙ, so the controller 7 determines that there has been a sufficient change in the temperature of both the first and second high thermal conductivity regions.

The controller 7 prioritises selection of a temperature sensor based on the largest temperature difference because ΔT₁ is more than double ΔT₃. Accordingly, at 25, the controller 7 selects the first temperature sensor because its corresponding high thermal conductivity region 8 exhibits the largest temperature difference. As a consequence, at 26, the controller 7 outputs a control signal to activate the function of the electronic device associated with the first temperature sensor. As described above, this control signal is received by a transmitter built into the remote control. The transmitter then sends an infrared communication to the electronic device to instruct it to carry out the function associated with the first temperature sensor.

An advantage of this arrangement is that if a user inadvertently contacts the high thermal conductivity region 8 of more than one zone 4 when using the remote control device 1, rather than transmitting control signals associated with each of the corresponding temperature sensors, the controller 7 is able to sense and evaluate the temperature differences and decide which control signal it should send to the transmitter.

In addition, by forming the small area of the input surface 3 that is above each temperature sensor 6 from a material having a relatively high thermal conductivity, and by forming the larger area of the input surface that is not above a temperature sensor 6 from a material having a relatively low thermal conductivity, an arrangement is provided that helps to physically prevent heat from a user's hand from unintentionally contacting a temperature sensor 6 because the low thermal conductivity region 9 does not readily transmit heat to a high thermal conductivity region 8. Therefore, the likelihood of undesired control signals being transmitted to the electronic device is reduced.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, modifications not described herein may also be employed within the scope of the invention, which is defined in the claims.

## Claims

1. A touchscreen (2) for a remote control device (1) of an electronic device, the touchscreen (2) comprising:
an input surface (3) divided into a plurality of zones (4); and
a plurality of temperature sensors (6), each temperature sensor (6) being provided within a respective zone (4) and constructed and arranged to obtain a measure of a temperature of a surface of the zone (4) contacted by a user; wherein:
each zone (4) comprises a region (8) formed from a material of relatively high thermal conductivity for contact by a user and the temperature of which is sensed by a temperature sensor (6) to obtain a measure of a temperature of the surface of the zone (4), and a region (9) formed from a material of relatively low thermal conductivity;
each region (8) formed from a material of relatively high thermal conductivity overlies and at least partially surrounds the temperature sensor (6) of the respective zone (4); and
the regions (8) formed from a material of relatively high thermal conductivity are physically separated from one another by the region(s) (9) formed from a material of relatively low thermal conductivity.

2. A touchscreen (2) according to claim 1, wherein each region (8) formed from a material of relatively high thermal conductivity is located directly above a respective temperature sensor (6).

3. A touchscreen (2) according to claim 1 or claim 2, wherein each region (8) formed from a material of relatively high thermal conductivity is located at the centre of its respective zone (4).

4. A touchscreen (2) according to any preceding claim, wherein the surface of each zone (4) comprises a relatively small region (8) formed from a material of relatively high thermal conductivity and a relatively large region (9) formed from a material of relatively low thermal conductivity.

5. A touchscreen (2) according to any preceding claim, wherein in each zone (4), in a plane of the touchscreen (2), the region (9) formed from a material of relatively low thermal conductivity surrounds the region (8) formed from a material of relatively high thermal conductivity.

6. A touchscreen (2) according to any preceding claim, comprising an ambient temperature sensor (11) constructed and arranged to obtain a measure of the ambient temperature of the touchscreen (2).

7. A remote control device (1) comprising a touchscreen (2) according to any preceding claim, arranged such that functions controlled by the remote control device (1) are configured to be selected by a user contacting a corresponding zone (4).

8. A remote control device (1) according to claim 7, comprising a controller (7) constructed and arranged to receive inputs from the temperature sensors (6) corresponding to a measure of a temperature of a surface of the respective zone (4) contacted by a user, wherein the controller (7) is arranged such that if inputs are received from more than one temperature sensor (6), the controller (7) selects the function corresponding to the zone (4) that has the highest temperature or the zone (4) that first reached a predetermined temperature.

## Patentansprüche

1. Berührungsbildschirm (2) für eine Fernsteuerungsvorrichtung (1) eines elektrischen Geräts, wobei der Berührungsbildschirm (2) umfasst:
Eine Eingabeoberfläche (3), die in eine Vielzahl von Zonen (4) geteilt ist; und
eine Vielzahl von Temperatursensoren (6), wobei jeder Temperatursensor (6) mit einer jeweiligen Zone (4) versehen und konstruiert und eingerichtet ist, eine Messung einer Temperatur einer Oberfläche der Zone (4) zu erhalten, die von einem Benutzer kontaktiert wurde; wobei:
Jede Zone (4) einen Bereich (8) umfasst, der aus einem Material relativ hoher Wärmeleitfähigkeit zum Kontakt durch einen Benutzer gebildet ist und dessen Temperatur durch einen Temperatursensor (6) abgetastet wird, um eine Messung einer Temperatur der Oberfläche der Zone (4) zu erhalten, und einen Bereich (9), der aus einem Material relativ niedriger Wärmeleitfähigkeit gebildet ist;
jeder Bereich (8), der aus einem Material relativ hoher Wärmeleitfähigkeit gebildet ist, liegt über dem Temperatursensor (6) der jeweiligen Zone (4) und umgibt diesen zumindest teilweise; und
die Bereiche (8), die teilweise aus einem Material relativ hoher Wärmeleitfähigkeit gebildet sind, sind physikalisch durch den/die Bereich(e) (9) getrennt, die aus einem Material relativ niedriger Wärmeleitfähigkeit gebildet sind.

2. Berührungsbildschirm (2) nach Anspruch 1, wobei sich jeder Bereich (8), der aus einem Material relativ hoher Wärmeleitfähigkeit gebildet ist, direkt über einem jeweiligen Temperatursensor (6) befindet.

3. Berührungsbildschirm (2) nach Anspruch 1 oder Anspruch 2, wobei sich jeder Bereich (8), der aus einem Material relativ hoher Wärmeleitfähigkeit gebildet ist, in der Mitte seiner jeweiligen Zone (4) befindet.

4. Berührungsbildschirm (2) nach einem vorhergehenden Anspruch, wobei die Oberfläche jeder Zone (4) einen relative kleinen Bereich (8), der aus einem Material relativ hoher Wärmeleitfähigkeit gebildet ist und einen relativ großen Bereich (9) umfasst, der aus einem Material relativ niedriger Wärmeleitfähigkeit gebildet ist.

5. Berührungsbildschirm (2) nach einem vorhergehenden Anspruch, wobei in jeder Zone (4), in einer Ebene des Berührungsbildschirms (2), der Bereich (9), der aus einem Material relativ niedriger Wärmeleitfähigkeit gebildet ist, den Bereich (8) umgibt, der aus einem Material relativ hoher Wärmeleitfähigkeit gebildet ist.

6. Berührungsbildschirm (2) nach einem vorhergehenden Anspruch, der einen Umgebungstemperatursensor (11) umfasst, der konstruiert und eingerichtet ist, eine Messung der Umgebungstemperatur des Berührungsbildschirms (2) zu erlangen.

7. Fernsteuerungsvorrichtung (1), die einen Berührungsbildschirm (2) nach einem vorhergehenden Anspruch umfasst, der derartig eingerichtet ist, dass von der Fernsteuerungsvorrichtung (1) gesteuerte Funktionen konfiguriert sind, von einem Benutzer selektiert zu werden, der eine entsprechende Zone (4) kontaktiert.

8. Fernsteuerungsvorrichtung (1) nach Anspruch 7, die einen Controller (7) umfasst, der konstruiert und eingerichtet ist, Eingaben von den Temperatursensoren (6) zu empfangen, die einer Messung einer Temperatur einer Oberfläche der jeweiligen Zone (4) entspricht, die von einem Benutzer kontaktiert wurde, wobei der Controller (7) derartig eingerichtet ist, dass, wenn Eingaben von mehr als einem Temperatursensor (6) empfangen werden, der Controller (7) die Funktion selektiert, die der Zone (4), welche die höchste Temperatur aufweist oder der Zone (4) entspricht, die eine vorbestimmte Temperatur zuerst erreicht.

## Revendications

1. Écran tactile (2) pour un dispositif de commande à distance (1) d'un dispositif électronique, l'écran tactile (2) comprenant :
une interface d'entrée (3) divisée en une pluralité de zones (4) ; et
une pluralité de capteurs de température (6), chaque capteur de température (6) étant prévu dans une zone respective (4) et construit et agencé de façon à obtenir la mesure d'une température d'une surface de la zone (4) contactée par un utilisateur ; dans lequel :
chaque zone (4) comprend une région (8) formée d'un matériau de conductivité relativement élevée en vue d'un contact par un utilisateur et dont la température est captée par un capteur de température (6) pour obtenir la mesure d'une température de la surface de la zone (4), et une région (9) formée à partir d'un matériau de conductivité thermique relativement basse ;
chaque région (8) formée à partir d'une matériau de conductivité thermique relativement élevée recouvre et au moins en partie entoure le capteur de température (6) de la zone respective (4) ; et
les régions (8) formées à partir d'un matériau de conductivité thermique relativement élevée sont physiquement séparées l'une de l'autre par la/les région(s) (9) formée(s) à partir d'un matériau de conductivité thermique relativement basse.

2. Écran tactile (2) selon la revendication 1, dans lequel chaque région (8) formée à partir d'un matériau de conductivité thermique relativement élevée est située directement au-dessus d'un capteur de température respectif (6) .

3. Écran tactile (2) selon, soit la revendication 1, soit la revendication 2, dans lequel chaque région (8) formée à partir d'un matériau de conductivité thermique relativement élevée est située au centre de sa zone respective (4).

4. Écran tactile (2) selon l'une quelconque des revendications précédentes, dans lequel la surface de chaque zone (4) comprend une région relativement petite (8) formée à partir d'un matériau de conductivité thermique relativement élevée et une région relativement large (9) formée à partir d'une matériau de conductivité thermique relativement basse.

5. Écran tactile (2) selon l'une quelconque des revendications précédentes, dans lequel dans chaque zone (4), dans un plan de l'écran tactile (2), la région (9) formée à partir d'un matériau de conductivité thermique relativement basse entoure la région (8) formée à partir d'un matériau de conductivité thermique relativement élevée.

6. Écran tactile (2) selon l'une quelconque des revendications précédentes, comprenant un capteur de température ambiante (11) construit et agencé de sorte à obtenir une mesure de la température ambiante de l'écran tactile (2).

7. Dispositif de commande à distance (1) comprenant un écran tactile (2) selon l'une quelconque des revendications précédentes, agencé de sorte que des fonctions contrôlées par le dispositif de commande à distance (1) soient configurées pour qu'un utilisateur contactant une zone correspondante puissent les sélectionnées (4).

8. Dispositif de commande à distance (1) selon la revendication 7, comprenant un contrôleur (7) construit et agencé pour recevoir des entrées de la part des capteurs de température (6) correspondant à la mesure d'une température d'une surface de la zone respective (4) contactée par un utilisateur, dans lequel le contrôleur (7) est agencé de sorte que si des entrées arrivent en provenance de plus d'un capteur de température (6), le contrôleur (7) sélectionne la fonction correspondant à la zone (4) dont la température est la plus élevée ou la zone (4) qui atteint en premier une température prédéterminée.
